# EUROPEAN PATENT APPLICATION

(11) **EP 4 803 332 A1**
(43) Date of publication of application: **09.09.2026**
(21) Application number: 24885068.7
(22) Date of filing: 29.10.2024
(51) Int. Cl.: B60D 1/62, B60D 1/64, B60T 17/04

(54) **DOUBLE ROTARY SEAL**

(30) Priority: 31.10.2023 ES 202331927 U
(71) Applicant: Alcalde Martinez, Jose Ignacio, 09007 Burgos (ES)
(72) Inventor: Alcalde Martinez, Jose Ignacio, 09007 Burgos (ES)
(74) Representative: González López-Menchero, Álvaro Luis
(86) International application number: PCT/ES2024/070665
(87) International publication number: WO 2025/093793

(57) **Abstract**

The present invention relates to a double rotary seal which consists of a support (1), attached to the chassis of a lorry cab, and a rotary base (2). The rotary base (2) has a double inlet connected to two hydraulic inlet circuits (31, 32) and a double outlet consisting of two individual outlets (21, 22) ending in a connector for the corresponding hose. Moreover, the individual outlets (21, 22) are parallel and have different lengths and the rotary base (2) consists of a rotary sleeve (201) in the form of a blind pipe and a fixed cylinder (202), which has two holes (203, 204) and two perimeter chambers (205, 206) at different heights, surrounded by elastic rings (207). Each hole (203, 204) is connected to a different chamber (205, 206) and each individual outlet (21, 22) passes through the sleeve (201) at the level of a different chamber (205, 206).

## Description

### TECHNICAL FIELD

The present application relates to a double rotary seal which safely and reliably allows two hydraulic circuits to be connected to the hoses that carry the hydraulic fluid to the trailer or other element towed by a lorry.

### STATE OF THE ART

Hydraulic equipment on lorries for moving elements on the trailer is known in the state of the art. These hoses often have to withstand a lot of pressure, so they must be very strong. The most critical points, which can most easily fail, are the seals. This is even more true if these seals are to rotate, as this implies that the elements of the seal cannot be firmly fixed to each other.

One possible solution is to make the seals fixed, but then there is a risk that the hoses will be levered or pinched, which could cause them to break. Therefore, the only solution is to achieve a safe rotary seal with as many degrees of freedom as possible.

The applicant is not aware of any system that allows the advantages of the invention to be obtained.

### BRIEF EXPLANATION OF THE INVENTION

The invention comprises a rotary seal, for lorry hydraulic systems, according to the first claim. The different variants thereof solve the aforementioned problems.

For this purpose, the double seal consists of a support attached to the chassis of a lorry cab and a rotary base. The rotary base has a double inlet connected to two hydraulic inlet circuits and a double outlet consisting of two individual outlets ending in a connector for the corresponding hose.

Preferably, the individual outlets are parallel and have different lengths.

The parallel individual outlets may comprise a connecting piece that connects the two outlets to increase mechanical strength. Thus, when one outlet works, the structure of the other individual outlet helps to sustain the stresses.

Other variants are shown in the rest of the specification.

### DESCRIPTION OF THE FIGURES

For a better understanding of the invention, a section with drawings is included that contains the following:
Figure 1: Diagram of an exemplary double seal according to the invention.
Figure 2: Schematic section of an exemplary rotary base at the level of an individual outlet.
Figure 3: Schematic section of the exemplary rotary base at the level of the other individual outlet.

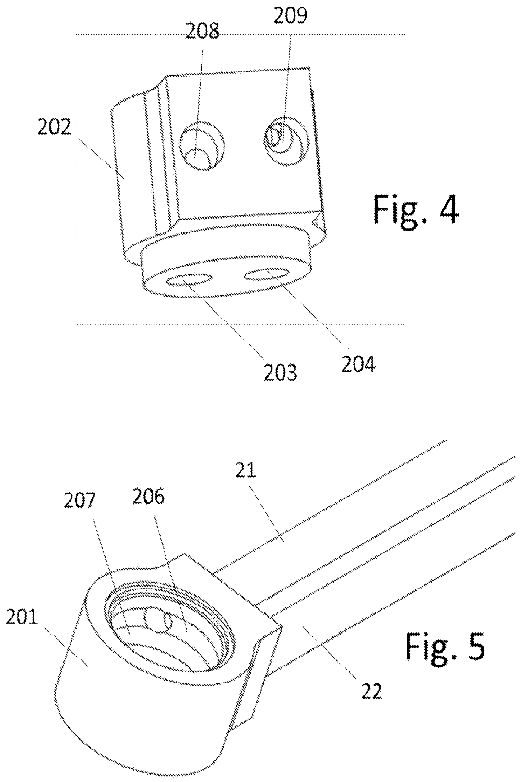

Figure 4: Perspective view of the sleeve of the example shown in figure 2 from the outside.
Figure 5: Perspective view of the rotary base of the example shown in figure 2 from below.

### EMBODIMENTS OF THE INVENTION

An embodiment of the invention is briefly described below, as an illustrative and nonlimiting example thereof.

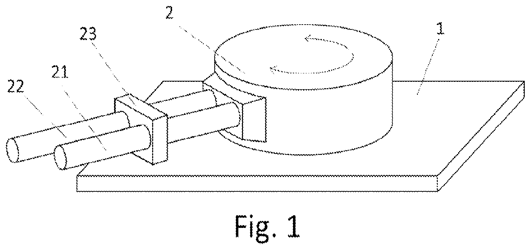

The equipment of the invention will be described with the support of figure 1, which shows an exemplary embodiment. The seal starts from a support (1) that is generally coupled to the chassis of the cab. A rotary base (2), connected to the hydraulic circuit, is arranged on the support (1). The rotary base (2) has a double inlet, connected to two hydraulic inlet circuits (31, 32), and a double outlet that is connected to the hoses that carry the hydraulic fluid to the points of use. It can be seen that the individual outlets (21, 22) shown, which form the double outlet, have different lengths. The individual outlets (21, 22) usually end in a threaded connector for the hose (not shown), although the connector may be of any type. A connecting piece (23) connects the two individual outlets (21, 22) to increase the strength of the seal.

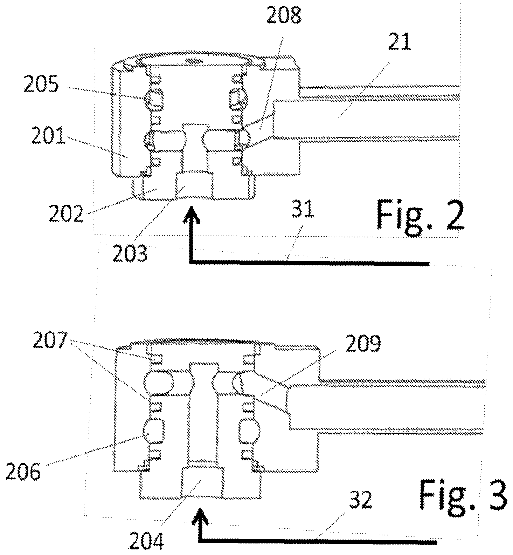

The connection between the base (2) and each hydraulic circuit (31, 32) must allow a tight connection at high working pressures (up to 500 bar). A diagram of the interior is shown in figure 2. It shows how the rotary base (2) consists of a rotary sleeve (201) in the form of a blind pipe, to which the individual outlets are connected, and a fixed cylinder (202), inside the sleeve (201): The cylinder (202) is attached to the support (1), directly or indirectly, so that it is immobilised. The cylinder (202) has two holes (203, 204) in its accessible area (opposite the blind part of the sleeve (201)) connected to two perimeter chambers (205, 206) at different heights. The chambers (205, 206) are represented by respective grooves on the inside of the sleeve (201). A series of elastic rings (207) separate the chambers (205, 206) from each other and from the outside of the rotary base (2). Each hole (203, 204) is connected to a different chamber (205, 206), so that the hydraulic fluids do not mix. In turn, each individual outlet (21, 22) passes through the sleeve (201) through a bore (208, 209) at a different level or inclination, so that it is connected to one or the other chamber (205, 206).

In use, when one of the hydraulic circuits (31, 32) is activated, it carries the hydraulic fluid pressure through the corresponding hole (203, 204) to the chamber (205, 206) connected to the correct individual outlet (21, 22). As this individual outlet (21, 22) is attached to a perimeter chamber (205, 206), its orientation is irrelevant and the rotary base (2) can rotate through 360°. The individual outlet (21, 22) in any angular position is in contact with the chamber (205, 206) and pressure is transmitted to the hose.

## Claims

1. A double seal, **characterised in that** it consists of a support (1) attached to the chassis of a lorry cab and a rotary base (2), wherein the rotary base (2) has a double inlet connected to two hydraulic inlet circuits (31, 32) and a double outlet consisting of two individual outlets (21, 22) ending in a connector for the corresponding hose.

2. The double seal, according to claim 1, **characterised in that** the individual outlets (21, 22) are parallel and have different lengths.

3. The double seal, according to claim 1, **characterised in that** it comprises a connecting piece (23) that connects the two parallel individual outlets (21, 22).

4. The double seal, according to claim 1, **characterised in that** the rotary base (2) consists:
a rotary sleeve (201) in the form of a blind pipe, to which the individual outlets (21, 22) are connected, and
a fixed cylinder (202), inside the sleeve (201), which has two holes (203, 204) in the area opposite the blind part of the sleeve (201) and two perimeter chambers (205, 206) at different heights, surrounded by elastic rings (207) and wherein each hole (203, 204) is connected to a different chamber (205, 206),
wherein each individual outlet (21, 22) passes through the sleeve (201) at the level of a different chamber (205, 206).
